# EUROPÄISCHE PATENTSCHRIFT

(11) **EP 0 637 285 B1**
(45) Veröffentlichungstag und Bekanntmachung des Hinweises auf die Patenterteilung: **16.05.2001**
(21) Anmeldenummer: 94905649.3
(22) Anmeldetag: 17.02.1994
(51) Int. Cl.: B32B 15/08, B65D 65/40, A61J 1/03

(54) **Behälter**
Container
Récipient

(30) Priorität: 25.02.1993 CH 57693
(43) Veröffentlichungstag der Anmeldung: 08.02.1995
(60) Teilanmeldung: 98105833.2
(73) Patentinhaber: Alusuisse Technology & Management AG, 8212 Neuhausen am Rheinfall (CH)
(72) Erfinder: BREITLER, Hans, Peter, CH-8280 Kreuzlingen (CH); SOMMERER, Klaus, D-78476 Allensbach (DE); ROULIN, Monique, CH-8200 Schaffhausen (CH)
(86) Internationale Anmeldenummer: CH9400035
(87) Internationale Veröffentlichungsnummer: WO9419184

(56) Entgegenhaltungen:
- EP-A- 0 002 692
- EP-A- 0 031 701
- EP-A- 0 234 515
- EP-A- 0 312 308
- EP-A- 0 414 636
- EP-A- 0 646 367
- EP-A- 0 710 101
- GB-A- 1 385 529
- GB-A- 1 495 659
- US-A- 4 983 431

## Beschreibung

Die Erfindung betrifft einen tief- und/oder streckgezogenen Behälter mit einer Mehrzahl von Fächern, Vertiefungen oder Näpfchen (Blisterpackungen) aus einem streck- und/oder tiefziehfähigen Metall-Kunststoff-Verbundwerkstoff, die Verwendung des Verbundwerkstoffes und Behälter aus dem Verbundwerkstoff.

Es ist bekannt aus Verbundwerkstoffen, streckengezogene Aluminium-Formpackungen für Pharmaprodukte und Lebensmittel z.B. als Durchdrückpackungen, Behältnisse, Untersiegelwannen, Doppelausformungen usw. einzusetzen. Diese sind in der Lage, die hohen Schutzanforderungen der Füllgüter gegen das Eindiffundieren von Sauerstoff, Wasserdampf und Licht oder das Ausdiffundieren von z.B. Duftstoffen optimal zu erfüllen, sowie die Benützerfreundlichkeit der Verpackung zu verbessern.

Ausserdem gehören oft Sterilisierbarkeit, die Pasteurisierbarkeit oder die Heissabfülleignung zu den gestellten Anforderungen.

Es ist Stand der Technik, streckgezogene Behälter aus Verbundwerkstoffen oder Laminaten herzustellen, die eine mittlere Aluminiumschicht, eine äussere Schicht aus orientiertem Polyamid und eine innere Schicht aus Polyvinylchlorid aufweisen. Aus Gründen des Umweltschutzes ist heute die Verwendung von Polyvinylchlorid einzuschränken. Polyvinylchloridfreie oder -arme Schichten haben den Vorteil, dass, wenn sie nicht stoff-rezykliert sondern energie-rezykliert werden, beim Verbrennen keine oder nur wenig Schadstoffe entstehen. Auch ist es für eine Entsorgung und Rezyklierung von solchen Laminaten vorteilhaft, dass möglichst wenig verschiedene Materialklassen vorhanden sind.

Verbundwerkstoffe für Verpackungen, die kein Polyvinylchlorid enthalten, sind an sich bekannt.

In der EP-A-0 474 587 wird ein Verbund für Behälter beschrieben, das Barriereeigenschaften aufweist. Der Verbund weist eine Metallschicht und beidseitig der Metallschicht je eine Polyolefinschicht auf. Dieser Verbund vermag nicht allen heute geforderten Eigenschaften gerecht zu werden.

Die DE-0S 27 57 370 beschreibt eine Verbundfolie zur Herstellung von tiefgezogenen Formteilen. Die Verbundfolie ist jedoch auf eine spezifische Aluminiumfolie angewiesen.

Die US-Patentschriften 4'085'244 und 4'216'268 beschreiben einen laminierten Verpackungsfilm aus einem äusseren biaxial orientierten Polyamidfilm, einer flexiblen Metallfolie, einem biaxial orientierten Polypropylen und einer inneren Siegelschicht zur Herstellung von Beuteln. Diese Folie ist aufgrund ihres asymmetrischen Aufbaus mit einer verhältnismässig starken inneren Polypropylenschicht als Streckziehlaminat wenig geeignet. Im weiteren ist das Rezyklieren durch die Anwendung von Kunststoffen zweier Klassen erschwert.

In der DE-Patentschrift 34 36 412 ist eine ein- oder beidseitig mit einer biaxial orientierten Polyesterfolie kaschiertes Metallblech beschrieben, das zum Ziehen von Dosen geeignet sein soll. Um den sicheren Verbund von Metall mit der Polyesterfolie zu erzielen, muss das Metallblech eine Doppelschicht aus hydratisiertem Chromoxid aufweisen. Ein derartiges Metallblech ist in seiner Hersellung aufwendig und Chromoxidschichten sind z.B. in der Lebensmittelverpackung unerwünscht bzw. können verboten werden.

Weitere Verbundwerkstoffe für Dosen sind aus der EP-A-0 312 308 und des EP-A-0 031 701 bekannt geworden.

Keiner dieser bisher beschriebenen Verbundewerkstoffe, Folienverbunde oder Laminate kann die zum Streckziehen geforderten optimalen Eigenschaften auf sich vereinigen. Dies betrifft auch die aus Umweltschutzgründen geforderten Eigenschaften, die z.B. die Rezyklierbarkeit von Laminaten resp. der daraus gefertigten Gegenstände, wie Verpackungen, fordern.

Die bisher bekannt gewordenen Verpackungslaminate weisen den Nachteil auf, nicht alle von der Verpackungsindustrie geforderten Eigenschaften, wie die Planheit (Steifigkeit) nach einer Umformung und die Befähigung der Laminate für Tief- oder Streckziehverfahren und auch für schockartig und/oder langeinwirkende Kälte- und Vakuumbedingungen sowie lange Lagerbedingungen, Pasteurisier- und Sterilisierbedingungen gleichermassen geeignet zu sein.

Ein für Behälter geeigneter Verbundwerkstoff muss das Dehnen der Metallschicht während dem Streckziehprozess unterstützen, so dass Flächendehnungen von 80 % und höher ohne Beschädigung, wie Perforierung der Metallschicht erreicht werden können. Der Schutz der Metallschicht bezüglich Beschädigung durch Reissen oder Perforation ist von grosser Bedeutung, da die Metallschicht vornehmlich als Barriereschicht gegen das Eindiffundieren von Gasen, wie Sauerstoff, von Wasserdampf und von Licht, sowie gegen das Ausdiffundieren von Duft- und Aromastoffen dient.

Der Verbundwerkstoff des Behälters muss auch nach dem Streck- oder Tiefziehverfahren ohne Delamination und Formänderung den Bedingungen eines Schockgefrier- und/oder eines Gefriertrocknungsprozesses gewachsen sein.

Aufgabe vorliegender Erfindung ist es, einen Behälter aus einem tief- und/oder streckziehfähigen Metall-Kunststoff-Verbundwerkstoff zur Verfügung zu stellen, der die genannten Nachteile nicht aufweist und die geforderten Eigenschaften hat.

Erfindungsgemäss wird das gestellte Ziel durch einen Behälter aus einem tief- und/oder streckziehfähigen Verbundwerkstoff erreicht, wobei der Verbundwerkstoff eine Metallschicht und beidseitig der Metallschicht eine Kunststoffschicht enthält, wobei die Metallschicht eine Dicke von 8 bis 80 µm aufweist und die Kunststoffschichten je eine Dicke von 20 bis 50 µm aufweisen und die Kunststoffschichten Thermoplaste auf Polyamid-Basis enthalten oder daraus bestehen.

Die Metallschicht des Verbundwerkstoffes kann beispielsweise aus Eisen, Stahl oder Kupfer sein, bevorzugt ist eine Metallschicht aus Aluminium oder einer Aluminiumlegierung. Zweckmässig ist eine Metallschicht aus Aluminium mit einer Reinheit von 98,6 % un höher, bevorzugt von 99,2 % und höher und besonders bevorzugt von 99,5 % und höher. Weiter zweckmässig sind Aluminiumlegierungen, z.B. des Typs AA 8014, AA 8079, oder AA 8101.

Bevorzugt sind Folien aus Aluminium oder einer Aluminiumlegierung. Die Folien weisen beispielsweise eine Reissdehnung von kleiner als 30 % uns insbesondere kleiner als 10 %, jeweils bei einer Dehnungsgeschwindigkeit von kleiner als 10'%/sec auf (DIN 53 455).

Insbesondere bevorzugt ist als Metallschicht ein weichgeglühtes, feinkörniges und/oder weitgehend texturfreies (isotropes) Aluminiumdünnband, insbesondere mit wenigstens 5 und besonders bevorzugt 7 Kornlagen über die Dicke des Bandes.

Die Oberfläche der Metallschicht und insbesondere der Aluminiumschicht ist vorzugsweise homogen, ohne Restschmiermittel und mit definierter Oberfläche. Die Aluminiumoberflächen können beispielsweise mit Einbrennlackierungen auf Epoxy- oder Phenolbasis oder mit Konversionsschichten, wie Mischoxid- und/oder Hydratschichten, behandelt sein. Weiter können die Oberflächen durch eine Koronaentladungsbehandlung vorbehandelt sein.

Die Kunststoffschichten enthalten einen Thermoplasten auf Polyamid-Basis oder können überwiegend einen Thermoplasten auf Polyamid-Basis enthalten oder können aus einem Thermoplasten auf Polyamid-Basis bestehen.

Zu den Thermoplasten auf Polyamid-Basis gehören beispielsweise die Polyamide Polyamid 6, ein Homopolymerisat aus ε-Caprolactam (Polycaprolactam); Polyamid 11, Polyamid 12, ein Homopolymerisat aus ω-Laurinlactam (Polylaurinlactam); Polyamid 6,6, ein Homopolykondensat aus Hexamethylendiamin und Adipinsäure (Polyhexamethylenadipamid); Polyamid 6,10, ein Homopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytri-methylhexamethylenterephthalamid), sowie Gemische davon. Bevorzugt sind Polycaprolactame.

Mit den Kunststoffschichten können z.B. Monofilme oder -schichten und Verbunde von zwei oder mehreren Filmen oder Schichten aus Kunststoffen, wie aus Polyamiden, Polyamidgemischen oder Misch-, Block-, Pfropf- oder Copolyamiden umfasst sein.

Die Kunststoffolien an sich können als Monofilm, jedoch auch als Verbund zweier oder mehrerer Filme vorliegen.

Die Polyamide und die Kunststoffschichten oder die Kunststoffolien daraus können mit Zusätzen, wie z.B. Stabilisatoren, Weichmachern, Füllstoffen, Pigmenten etc. versehen werden.

Die Kunststoffschichten können gereckt sein und sind zweckmässig uniaxial und bevorzugt biaxial gereckt. Insbesondere können die Kunststoffschichten, insbesondere Kunststoffolien, uniaxial und bevorzugt biaxial gereckte Thermoplaste auf Polyamid-Basis enthalten oder daraus bestehen. Ganz besonders bevorzugt sind uniaxial oder insbesondere biaxial gereckte Polyamide, insbesondere Polyamidfolien.

Das Fliessverhalten der Kunststoffschichten in Form von Folien und insbesondere der biaxial gereckten Polyamidfolien ist zweckmässig möglichst isotrop.

Im weiteren werden Kunststoffolien bevorzugt, deren Fliessverhalten eine hohe Verfestigung zeigt.

Mit hoher Verfestigung wird ausgedrückt, dass mit zunehmender Dehnung der Folie die Spannung in Maschinenrichtung und transversale Richtung ansteigt.

Ebenfalls bevorzugt ist ein Fliessverhalten der Folien, das durch einen positiven Verfestigungsanstieg, zumindest in der Maschinenrichtung oder der transversalen Richtung, gekennzeichnet ist. Der positive Verfestigungsanstieg drückt den Quotienten des Spannungsinkrementes über dem Dehnungsinkrement aus und liegt deshalb bevorzugt über einem Wert von 0, das heisst der Wert ist bevorzugt positiv.

Besonders geeignete Kunststoffolien weisen einen hohen R-Wert auf, wobei ein R-Wert insbesondere über 1 liegt. Der R-Wert drückt aus, ob das Material bevorzugt aus der Breite oder aus der Dicke der jeweiligen Folie fliesst. Ein R-Wert über 1 bedeutet, dass das Material bevorzugt aus der Breite der Probe fliesst.

Zu den bevorzugten Folien gehören beispielsweise biaxial gereckte Polyamidfolien mit einer Zugfestigkeit in beiden Richtungen von über 150 MPa, bevorzugt über 200 MPa.

Die Bruchdehnung bevorzugter Folien liegt z.B. bei über 40 % und insbesondere bei über 50 %.

Die Spannung im Dehnungsbereich von 5 bis 15 % von bevorzugten Folien liegt zweckmässig zwischen 40 und 120 MPa und insbesondere zwischen 50 und 100 MPa.

Die Dicke der Metallschicht kann bevorzugt von 40 bis 70 am und insbesondere von 45 bis 60 µm betragen.

Die Dicke der Kunststoffschichten beträgt jeweils bevorzugt 20 bis 50 µm und insbesondere 20 bis 30 µm.

Die Kunststoffschichten beidseits der Metallschicht des erfindungsgemässen Verbundwerkstoffes können beispielsweise die gleiche Dicke aufweisen oder die Dicke der beiden Kunststoffschichten differiert bevorzugt nicht mehr als 20 %, insbesondere nicht mehr als 10 %, d.h. die Dicken der Kunststoffschichten differieren bevorzugt um 0 bis 20 %, respektiv 0 bis 10 %, ihres Masses der Dicke voneinander.

Die beidseitig der Metallschicht befindlichen Kunststoffschichten und insbesondere die Thermoplaste auf Polyamid-Basis können unabhängig voneinander jeweils ein- oder beidseitig zusätzlich mit einer aussenliegenden siegelfähigen Schicht und/oder einer Sperrschicht aus thermoplastischen Kunststoffen versehen sein.

Der erfindungsgemässe Behälter aus dem Verbundwerkstoff kann auch auf einer oder beiden Aussenseiten eine Siegelschicht oder siegelfähige Schicht aufweisen.

Der Verbundwerkstoff für die Behälter nach vorliegender Erfindung bildet einen kunststoffolienhaltigen Verbund und der kunststoffolienhaltige Verbund kann zur Erweiterung dessen Eigenschaften, mit einer bzw. mehreren weiteren Materialschichten, wie z.B. Folien aus Kunststoff, überzogen werden.

Siegelfähige Schichten sind z.B. siegelbare Folien, die z.B. mittels Lackkaschierung, z.B. mit lösemittelhaltigen oder lösemittelfreien Klebern, bzw. wasserbasierenden Klebstoffsystemen, durch Extrusionskaschierungen oder durch Extrusionsbeschichtung aufgebracht werden. Siegelbare Folien können beispielsweise LLDPE, LDPE, MDPE, HDPE, Polypropylen, Polyethylenterephthalat oder Ionomere auf Polyolefinbasis enthalten oder daraus bestehen. Ionomere oder ionenhaltige Polymere mit typischen Ionomereigenschaften können thermoplastische Copolymere von Olefinen mit carboxylhaltigen Monomeren, von denen ein Teil als freie Carboxylgruppen vorliegen und der Rest mit Metallkationen gebunden ist, so dass eine gewisse Quervernetzung erreicht wird, darstellen. Ionomere auf Basis von Polyethylenen sind unter dem Markennamen Surlyn bekannt. Siegelbare Folien können eine Dicke von 6 bis 100 µm aufweisen. Es können auch eine oder mehrere Schichten z.B. eines Siegellacks oder Heissiegellacks durch eine Lackanwendung auf den Kunststoffolienverbund, beispielsweise in einer Dicke von 1 bis 10 µm, aufgebracht werden.

Sowohl durch eine einseitge als auch beidseitige Coextrusion der Kunststoffschichten mit beispielsweise einem Polypropylen/Polyethylen-Copolymer erhält man einen einseitig resp. beidseitig siegelbaren Verbund.

Demnach ist es zweckmässig, dass die Kunststoffschichten einen Thermoplasten auf Polyamid-Basis enthalten oder daraus bestehen und wenigstens einer der Thermoplasten auf Polyamid-Basis auf wenigstens einer Seite mit einer Siegelschicht versehen ist. D.h., jede Schicht aus einem Thermoplasten auf Polyamid-Basis kann, unabhängig von den anderen Schichten, ein- oder beidseitig mit einer siegelfähigen Schicht bedeckt sein.

Neben der Metallfolie kann auch wenigstens eine weitere Schicht als Sperrschicht für Gase, Dämpfe, Feuchtigkeit, Geruch- und Geschmackstoffe vorgesehen werden. Beispiele von Sperrschichten sind Folien mit Sperreigenschaften aus thermoplastischen Kunststoffen. Beispiele sind Folien aus Ethylenvinylalkohol-Copolymeren, Polyvinylidenchlorid, Polyacrylnitril, z.B. BAREX, Polyacryl-Polyamid-Copolymere Sperrschicht-Copolyester, z.B. Mitsui B-010, aromatische und amorphe Polyamide, z.B. N-MXD6 der Mitsubishi Gas Chemical, bestehen oder diese Polymere enthalten und können z.B. 6 µm bis 100 µm dick sein. Bevorzugt ist eine Polyvinyliden-Sperrschicht. Beispielsweise liegen Sperrschichten zwischen der Metallschicht und der oder den Polyamidschichten, bevorzugt liegen die Sperrschichten an der Polyamidschicht, auf der Metallschicht abgewandten Seite, an. Insbesondere ist eine Sperrschicht auf einer Seite der Metallschicht, aufliegend auf der Polyamidschicht vorgesehen.

Die Oberfläche der Kunststoffolien soll zweckmässig mindestens 35 mN/m, bevorzugt mindestens 38 mN/m Oberflächenspannung aufweisen, damit das Auftragen von Kleber auf die Kunststoffoberfläche optimal durchgeführt werden kann.

Durch Korona-, Plasma- cder Flammvorbehandlung der Oberflächen der Kunststoffolien und/oder der Metall-, wie Aluminiumoberflächen können die Oberflächenspannungen und damit auch die Klebeigenschaften gesteuert werden.

Zum Verbinden der Kunststoffolien mit dem Aluminium oder der Kunststofffolien unter sich wird zweckmässig ein Kaschierkleber und/oder ein Haftvermittler (Primer) angewendet. Der Kaschierkleber kann durch Lackkaschierung auf die zu verklebende Oberfläche aufgetragen werden.

Geeignete Kleber sind beispielsweise Vinylchlorid-Copolymerisate, Vinylchlorid-Vinylacetat-Copolymerisate, polymerisierbare Polyester, Vinylpyridin-Polymerisate, Vinylpyridin-Polymerisate in Kombination mit Epoxidharzen, Butadien-Arylnitril-Methacrylsäure-Copolymerisate, Phenolharze, Kautschukderivate, Acrylharze, Acrylharze mit Phenol bzw. Epoxidharzen, siliciumorganische Verbindungen, wie Organosilane, modifizierte Polyolefine, wie säuremodifizierte Polyolefine oder Ethylenacrylsäure (EAA).

Bevorzugt werden EAA (Ethylenacrylsäure) oder modifizierte Polyolefine, wie z.B. modifizierte Polypropylene.

Ein bevorzugtes modifiziertes Polypropylen ist ein Addukt aus Maleinsäureanhydrid und einem Ethylen-Propylen-Copolymer. Ganz besonders bevorzugt werden Dispersionen von modifizierten Polyolefinen. Ein Beispiel einer Dispersion eines modifizierten Polypropylens ist Morprime (Markenname der Firma Morton Chemical Division fo Norton Norwich Products, Inc.).

Weiter geeignet sind Haftvermittler, wie Nitrilkautschuk-Phenolharze, Epoxide, Acrylnitril-Butadien-Kautschuk, urethanmodifizier-te Acryle, Polyester-co-Polyamide, Heissschmelzpolyester, mit Heissschmelzpolyester vernetzte Polyisocyanate, polyisobutylenmodifizierte Styrol-Butadien-Kautschuke, Urethane, Polyurethane, Ethylen-Acrylsäure-Mischpolymere und Ethylenvinylacetat-Mischpolymere.

Werden als Kleber Kaschierkleber angewendet, so können die Kaschierkleber lösungsmittelhaltig oder lösungsmittelfrei und auch wasserhaltig sein. Beispiele sind lösungsmittelhaltige, lösungsmittelfreie oder wässrige Acrylatkleber oder Polyurethan-Kleber.

Bevorzugt werden Kaschierkleber auf Polyurethan-Basis.

Der Haftvermittler oder Primer kann beispielsweise in Mengen von 0,1 bis 10 g/m², zweckmässig in Mengen von 0,8 bis 6 g/m² und bevorzugt in Mengen von 2 bis 6 g/m² angewendet werden.

In der Regel wird eine Schichtdicke des Klebers von 1 bis 12 µm und bevorzugt von 1,5 bis 9 µm eingehalten. Anstelle der Schichtdicke lässt sich die Menge des Klebers, insbesondere zwischen der Metallschicht und den beidseitig der Metallschicht unmittelbar angeordneten Kunststoffschichten durch die Menge des Kaschierklebers ausdrücken. Beispielsweise liegt die Menge bei 1,0 bis 14 g/m², zweckmässig bei 1,5 bis 9 g/m² und bevorzugt bei 1,5 bis 6 g/m². Die Menge ist ohne allfälliges Lösungsmittel angegeben. Die Kunststoffolien können auch gegenseitig oder auf die Metall-, wie Aluminiumoberfläche wärmekaschiert werden.

Typische Schichtaufbauten von Verbundwerkstoffen für Behälter nach vorliegender Erfindung enthalten beispielsweise
a) ein mittlere Schicht aus Aluminium in einer Dicke von beispielsweise 8 bis 80 µm, bevorzugt von 40 bis 70 µm und insbesondere 45 bis 60 µm und beidseitig der Aluminiumschicht
b) und b') je eine Schicht eines Kaschierklebers und/oder Haftvermittlers in einer Dicke von 1,5 bis 9 µm, resp. 1 bis 10 g/m²
c) und c') je eine Schicht eines biaxial gereckten Polyamides in einer Dicke von beispielsweise 20 bis 50 µm, bevorzugt 20 bis 40 µm und insbesondere 20 bis 30 µm
   und gegebenenfalls
d) und/oder d') eine Sperrschicht oder je eine Sperrschicht
   und gegebenenfalls
e) und/oder e') eine Schicht eines Siegellackes oder eine Siegelschicht oder je eine Schicht eines Siegellackes oder eine Siegelschicht in Mengen von 2 bis 6 g/m², resp. in bis 10 µm Dicke.

Zwischen den Schichten c) und d), c) und e) und/oder d) und e), resp. c') und d'), c') und e') und/oder d') und e') können ebenfalls Kaschierkleber- und/oder Haftvermittlerschichten b), resp. b') angewendet werden.

Zweckmässig sind Behälter aus Verbundwerkstoffen, enthaltend beispielsweise die Schicht a), die Schichten b) und b'), die Schichten c) und c') und eine Schicht e) oder enthalten die Schicht a), die Schichten b) und b'), die Schichten c) und c') und die Schicht e'). Andere zweckmässige Verbundwerkstoffe enthalten beispielsweise die Schicht a), die Schichten b) und b'), die Schichten c) und c'), gegebenenfalls eine weitere Schicht b') und darauf eine Schicht d'), sowie gegebenenfalls auf der Schicht c) und/oder d') je eine Schicht e) respektive e'). Zwischen der Schicht c) und e) oder Schicht d') und e') kann jeweils auch eine Schicht b) respektive b') vorgesehen sein. Sinngemäss befinden sich auf einer Seite der Schicht a) die Schichten b), c), d) und e) und auf der anderen Seite der Schicht a) die Schichten b'), c'), d') und e').

Aus den Verbundwerkstoffen hergestellte erfindungsgemässen Behälter sind Verpackungen oder Teile von Verpackungen und müssen z.B. hitzebeständig und kältebeständig sein, sowie diesen Bedingungen, auch im Vakuum, widerstehen. Deshalb sind die einzelnen Bestandteile der Verbundwerkstoffe sowohl für sich, als auch in gegenseitigem Verbund zweckmässig hitzebeständig und kältebeständig. Diese Eigenschaften treffen insbesondere für die einzelnen Kunststofffolien, allfällige Extrudate, Coextrudate oder Laminate und die verwendeten Kleber und Haftvermittler zu.

Die Erfindung betrifft auch die Verwendung der tief- und/oder streckgezogenen und insbesondere streckgezogenen Behältern, z.B. als Bodenteile, Blisterpackungen, Blisterpackungsbodenteile oder Behälter oder Bodenteile mit einer Mehrzahl von Fächern, Vertiefungen oder Näpfchen. Die Erfindung betrifft auch die Herstellung von kalt tief- und/oder streckgezogenen und insbesondere streckgezogenen Behältern.

Die tief- und/oder streckziehfähigen Verbundwerkstoffe sind beispielsweise zur Herstellung von tief- und/oder streckgezogenen Behältern nach vorliegender Erfindung mit einem Verhältnis von Höhe zu Durchmesser von beispielsweise 1 zu 4 und zweckmässig von 1 zu 3,7 bis 3,2, insbesondere bei flachem Behälterboden, geeignet.

Mit Durchmesser sind bei Behältern nicht runden Grundrisses sinngemäss die Länge der Diagonale oder die durchschnittlichen Längen der Diagonalen zu verstehen.

Die Verfahren zum Tiefen, wie Tiefzieh- oder Streckverfahren oder Kombinationen davon, zur Herstellung von erfindungsgemässen Behältern aus den tief- und/oder streckziehfähigen Verbundwerkstoffen sind an sich bekannt. In der Regel wird ein Abschnitt des Verbundwerkstoffes über eine Matrize gelegt. Am Rande der Matrize, mit Hilfe eines Niederhalters, wird der Verbundwerkstoff festgehalten und ein Stempel senkt sich unter Verformung des Verbundwerkstoffes in die Matrize. Die Verbundwerkstoffe eignen sich insbesondere zum Streckziehen. Die erfindungsgemässen Verbundwerkstoffe eignen sich insbesondere zum kalten Tiefen und zum kalten Streckziehen.

Der Verbundwerkstoff wird beim Streckziehen, da aus dem Randbereich kein Material nachfliessen kann, gestreckt. Dadurch nimmt die Dicke des Laminates ab.

Der beschriebene Verbundaufbau des Verbundwerkstoffes hat eine optimale Streckziehneignung mit kontrollierten mechanischen Eigenschaften, die das Dehnen der Aluminiumschicht während dem Streckziehprozess unterstützen, so dass Flächendehnungen von 80 % und höher ohne Beschädigung der Metallschicht erreicht werden können.

Im uniaxialen Spannungszustand können Dehnungen ohne Beschädigung der Aluminiumschicht bis 40 % und höher erreicht werden.

Die vorliegende Erfindung umfasst auch erfindungsgemässe Behälter aus dem streckziehfähigen Verbundwerkstoff, zweckmässig mit einem Verhältnis von Höhe zu Durchmesser von 1 zu 4 und bevorzugt von 1 zu 3,7 bis 1 zu 3,2, insbesondere bei flachem Behälterboden.

Die erfindungsgemässen Behälter, die aus dem streckziehfähigen Verbundwerkstoff hergestellt werden, sind beispielsweise zur Aufnahme von Nahrungsmitteln für Mensch oder Tier geeignet. Andere Verwendungszwecke sind z.B. Behälter für pharmazeutische Erzeugnisse, wie Dragees, Tabletten, Pulver etc. und kosmetische Produkte, wie parfümierte Servietten, Färbemittel etc.

Vorliegender Verbundwerkstoff eignet sich insbesondere zum Streckziehen zur Formung von Tablettenverpackungen. Solche Tablettenverpackungen können einen Boden mit wenigstens einem und insbesondere eine Vielzahl, beispielsweise 5 bis 50 einzelne Fächer, Vertiefungen oder Näpfchen aufweisen, in die eine Tablette oder eine andere Darreichungsform eines Wirkstoffes eingelegt werden kann, um anschliessend ein Deckelmaterial aufzubringen und den Boden mit einem Deckel trennfest zu verbinden. Solche Tablettenverpackungen sind in der Fachwelt als Blisterpackungen bekannt. Die Bodenteile aus einem Verbundwerkstoff nach vorliegender Erfindung werden beispielsweise durch Vorbereiten von Verbundwerkstoff in Form von Vorratsrollen oder Bögen und Zuführen des Verbundwerkstoffes zu einer Streckvorrichtung, wobei ein Tiefen erfolgt, und anschliessendes Konfektionieren, erzeugt. Es ist auch möglich, den Verbundwerkstoff für Bodenteile von Verpackungen für pharmazeutische Produkte zu verwenden, wobei das pharmazeutische Produkt in flüssiger Form in den Bodenteil einer Verpackung mit Vertiefungen gegeben, gefroren oder schockgefroren und einem Gefriertrocknungsprozess unterworfen wird, um anschliessend den Bodenteil mit einem Deckel zu verbinden, wobei das gefriergetrocknete pharmazeutische Produkt jeweils in einer Vertiefung im Bodenteil verbleibt.

Beispielsweise kann ein pharmazeutischer Wirkstoff in eine wasserlösliche Matrix aufgenommen werden, wobei die Matrix eine Mischung von Sacharid und Polymer sein kann, und wobei die Formulierung auch andere Hilfsstoffe, wie Suspensionshilfsmittel, Netzmittel, Stabilisatoren, Antioxidantien, Farbstoffe und Geschmacksstoffe enthalten kann. Aus diesen Materialien wird eine stabile wässrige Suspension erzeugt und die Suspension bereitgestellt. In jedes der einzelnen Vertiefungen eines Bodenteils wird eine vorbestimmte Menge der Suspension gefüllt, und der Bodenteil mit Inhalt eingefroren. Die Bodenteile werden einer Gefriertrocknungsvorrichtung zugeführt und den Gefriertrocknungsbedingungen ausgesetzt. Nach erfolgter Gefriertrocknung bis zu einem vorbestimmten Grad werden die Bodenteile mit einem Deckelmaterial überdeckt und das Deckelmaterial um jedes Fach herum trennfest angesiegelt. Dieses Verfahren ist beispielsweise in "Manufacturing Chemist", February 1990, Seiten 36 und 37 beschrieben.

Demnach betrifft vorliegende Erfindung auch die Verwendung des tief- und/oder streckziehfähigen Verbundwerkstoffes für die Herstellung von tief- und/oder streckgezogenen erfindungsgemässen Behältern mit einer Mehrzahl von Fächern, Vertiefungen oder Näpfchen (Blisterpackungen) für den Einsatz in Gefriertrocknungsverfahren von pharmazeutischen Formulierungen.

Ferner betrifft vorliegende Erfindung Behälter mit einer Mehrzahl von Fächern, Vertiefungen oder Näpfchen (Blisterpackungen) für den Einsatz in Gefriertrocknungsverfahren von pharmazeutischen Formulierungen, aus tief- und/oder streckziehfähigen Verbundwerkstoffen nach vorliegender Erfindung.

Geeignetes Deckelmaterial zur Erzeugung der Deckel kann beispielsweise eine Metallfolie, wie eine Aluminiumfolie, beispielsweise in einer Dicke von 15 bis 25 µm sein, die an einer 20 bis 25 µm dicken Polyethylenterephthalatfolie anliegt und wobei die unbeschichtete Seite der Aluminiumfolie mit einem Heissiegellack beschichtet ist und der Deckel über den Heissiegellack am Bodenteil trennfest befestigt wird. Ein anderes Deckelmaterial kann beispielsweise von aussen nach innen folgende Schichten aufweisen, Kraftpapier mit einem Flächengewicht von 40 bis 60 g/m², eine Polyethylenterephthalatfolie einer Dicke von 10 bis 15 µm, eine 15 bis 25 µm dicke Aluminiumfolie und ein Siegellack in einer Menge von 6 bis 8g/m².

### Beispiel 1

Auf ein Aluminiumdünnband mit einer Stärke von 45 µm und einer sauberen Oberfläche ohne Vorbehandlung wird ein Polyurethan-Kaschierkleber mit einem Auftragsgewicht von 4 g/m² aufgebracht.

Das Lösungsmittel vom Kaschierkleber wird im Trockenkanal verdampft und anschliessend wird auf dem Aluminiumdünnband im Kaschierspalt unter Druck eine biaxial gereckte Polyamidfolie mit einer Stärke von 25 µm kaschiert und der Verbund aufgewickelt oder gleich weiterverarbeitet.

Die Weiterverarbeitung erfolgt identisch wie vorhin, nur wird nun die andere Seite des Aluminiumdünnbandes unter gleichen Bedingungen eine Polyamidfolie einer Stärke von 25 µm kaschiert.

Eine der Polyamidfolien des Verbundes wird auf ihrer Aussenseite mit einem Heissiegellack, enthaltend Polyvinylidenchlorid, in einer Menge von etwa 1,5 g/m² beschichtet.

### Beispiel 2

Ein Verbundwerkstoff gemäss Beispiel 1 wird anstelle des polyvinylidenchloridenhaltigen Siegellackes mit einem Heissiegellack in einer Menge von 4 g/m² beschichtet.

### Beispiel 3

Der Versuch gemäss Beispiel 1 wird wiederholt, anstelle der 45 µm dicken Aluminiumfolie wird eine 60 µm dicke Aluminiumfolie angewendet.

### Beispiel 4

Der Versuch gemäss Beispiel 2 wird wiederholt, anstelle der 45 µm dicken Aluminiumfolie eine 60 µm dicke Aluminiumfolie angewendet.

### Beispiel 5

Es wird aus einem Aluminiumdünnband, wobei die Reinheit des Aluminiums 98,5 % und die Dicke des Bandes 45 µm beträgt, und einem Polyamidfilm einer Dicke von 25 µm, ein Verbundwerkstoff folgenden Aufbaus hergestellt: Polyamidfilm 25 µm, Kleber 3,5 g/m², Primer oder Haftvermittler 2,0 g/m², eine Aluminiumfolie einer Dicke von 45 µm, eine Kleberschicht von 4 g/m² und eine Polyamidfolie einer Dicke von 25 µm. Es resultiert ein Verbundwerkstoff mit einem Flächengewicht von 188,5 g/m².

### Beispiel 6

Es wird ein Verbundwerkstoff hergestellt enthaltend den folgenden Schichtaufbau, Polyamidfilm einer Dicke von 25 µm, ein Kleber in einer Menge von 3,5 g/m², ein Haftvermittler oder Primer von 2,0 g/m², eine Aluminiumfolie in einer Dicke von 60 µm, ein Kleber in einer Menge von 4,0 g/m² und ein Polyamidfilm in einer Dicke von 25 µm. Das Flächengewicht des fertigen Verbundwekstoffes beträgt 229 g/m².

### Beispiel 7

Durch Streckziehen mit einem flachen Stempel von Durchmesser 27 mm und einer Matrize von Durchmesser 30 mm kann mit Mustern aus den Beispielen 1 bis 6 eine Bruchtiefe von über 9 mm erreicht werden.

Durch Streckziehen mit einem halbkugeligen Stempel mit Radius 13,5 mm und einer Matrize von Durchmesser 30 mm, kann mit Mustern aus den Beispielen 1 bis 6 eine Bruchtiefe von über 13 mm erreicht werden.

Ab einer Temperatur von 140 °C kann eine ausreichende thermische Siegelung an den Mustern aus den Beispielen 1 bis 6 durchgeführt werden.

Die Sterilisation bei einer Temperatur von 121 °C während 30 min nach der Umformung und eine Auslagerung während drei Monaten bei 45 °C führen zu keinen Delaminationen der Schichten der Muster aus den Beispielen 1 bis 6.

Eine Kältebehandlung bei Temperaturen von - 80 °C während 3 Minuten oder bei - 40 °C während 2 h bei einem Unterdruck und eine anschliessende Auslagerung während drei Monaten bei 45 °C führen zu keiner Delaminationen der Schichten der Muster aus den Beispielen 1 bis 6.

Eine Kältebehandlung bei Temperaturen von - 80 °C während 3 Minuten oder bei - 40 °C während 2 h bei Unterdruck von, wobei die Oberfläche der Muster mit einer wässrigen Suspension bedeckt ist, führt zu keinen Delaminationen an den Mustern gemäss Beispielen 1 bis 6.

## Patentansprüche

1. Tief- und/oder streckgezogene Behälter mit einer Mehrzahl von Fächern, Vertiefungen oder Näpfchen (Blisterpackungen) aus einem tief- und/oder streckziehfähigen Verbundwerkstoff, wobei der Verbundwerkstoff eine Metallschicht und beidseitig der Metallschicht eine Kunststoffschicht enthält und die Metallschicht eine Dicke von 8 bis 80 µm aufweist,
dadurch gekennzeichnet, dass
die Kunststoffschichten je eine Dicke von 20 bis 30 µm aufweisen und die Kunststoffschichten Thermoplaste auf Polyamid-Basis enthalten oder daraus bestehen und die Thermoplasten auf Polyamid-Basis biaxial gereckte Polyamidfolien sind.

2. Behälter nach Anspruch 1, dadurch gekennzeichnet, dass die Metallschicht eine Folie oder ein Dünnband aus Aluminium oder einer Aluminiumlegierung ist.

3. Behälter nach Anspruch 1, dadurch gekennzeichnet, dass die Thermoplaste auf Polyamid-Basis ein Polycaprolactam oder ein Copolymer davon darstellen.

4. Behälter nach Anspruch 1, dadurch gekennzeichnet, dass die Kunststoffschichten einen Thermoplasten auf Polyamid-Basis enthalten oder daraus bestehen und wenigstens einer der Thermoplasten auf Polyamid-Basis auf wenigstens einer Seite mit einer Siegelschicht versehen ist.

5. Behälter nach Anspruch 1, dadurch gekennzeichnet, dass die beiden Kunststoffschichten in ihren Dicken um 0 bis 20% ihres Masses der Dicke differieren.

6. Verwendung des Behälters gemäss Anspruch 1 für den Einsatz in Gefriertrocknungsverfahren von pharmazeutischen Formulierungen.

7. Verfahren zur Herstellung von Behältern gemäss Anspruch 1, dadurch gekennzeichnet, dass die Verbundwerkstoffe kalt tief- und/oder streckgezogen werden.

8. Behälter nach Anspruch 1 für den Einsatz in Gefriertrocknungsverfahren von pharmazeutischen Formulieren, hergestellt aus dem tief- und/oder streckziehfähigen Verbundwerkstoff.

## Claims

1. Deep-drawn and/or stretch-formed container with a plurality of compartments, recesses or cups (blister packs) made from a deep-drawable and/or stretch-formable composite material, the composite material having a metal layer and a plastic layer on either side of the metal layer and the metal layer having a thickness of 8 to 80 µm, characterised in that the plastic layers each have a thickness of 20 to 30 µm, the plastic layers contain or consist of polyamide-based thermoplastics and the polyamide-based thermoplastics are biaxially oriented polyamide films.

2. Container according to claim 1, characterised in that the metal layer is a foil or a thin strip of aluminium or an aluminium alloy.

3. Container according to claim 1, characterised in that the polyamide-based thermoplastics are a polycaprolactam or a copolymer thereof.

4. Container according to claim 1, characterised in that the plastic layers contain or consist of polyamide-based thermoplastics and at least one of the polyamide-based thermoplastics is provided on at least one side with a sealing layer.

5. Container according to claim 1, characterised in that the thicknesses of the two plastic layers differ by 0 to 20 %.

6. Use of the container according to claim 1 for the freeze-drying of pharmaceutical formulations.

7. Process for the production of containers according to claim 1, characterised in that the composite materials are cold deep-drawn and/or stretch-formed.

8. Container according to claim 1 for use in the freeze-drying of pharmaceutical formulations, made from the deep-drawable and/or stretch-formable composite material.

## Revendications

1. Récipients emboutis par emboutissage profond et/ou étirés comportant une multiplicité de compartiments, d'évidements ou d'alvéoles (emballages blisters) en un matériau composite susceptible d'emboutissage profond et/ou d'étirage, où le matériau composite contient une couche métallique et, de chaque côté de la couche métallique, une couche de matière plastique et la couche métallique a une épaisseur de 8 à 80 µm, caractérisés en ce que les couches de matières plastiques ont chacune une épaisseur de 20 à 30 µm et les couches de matières plastiques contiennent des matières thermoplastiques à base de polyamide ou consistent en celles-ci et les matières thermoplastiques à base de polyamide sont des feuilles de polyamide étirées biaxialement.

2. Récipients selon la revendication 1, caractérisés en ce que la couche métallique est une feuille ou une bande mince en aluminium ou en un alliage d'aluminium.

3. Récipients selon la revendication 1, caractérisés en ce que les matières thermoplastiques à base de polyamide sont un polycaprolactame ou un copolymère de celui-ci.

4. Récipients selon la revendication 1, caractérisés en ce que les couches de matières plastiques contiennent une matière thermoplastique à base de polyamide ou consistent en celle-ci et au moins l'une des matières thermoplastiques à base de polyamide est munie d'une couche de soudage sur au moins un côté.

5. Récipients selon la revendication 1, caractérisés en ce que les deux couches de matières plastiques diffèrent par leurs épaisseurs de 0 à 20 % de leur dimension dans l'épaisseur.

6. Utilisation du récipient selon la revendication 1 dans un procédé de lyophilisation de formulations pharmaceutiques.

7. Procédé de fabrication de récipients selon la revendication 1, caractérisé en ce que les matériaux composites sont soumis à un emboutissage profond et/ou sont étirés à froid.

8. Récipients selon la revendication 1, destinés à être utilisés dans des procédés de lyophilisation de formulations pharmaceutiques fabriqués à partir du matériau composite susceptible d'emboutissage profond et/ou d'étirage.
